# EUROPÄISCHE PATENTSCHRIFT

(11) **EP 2 273 048 B1**
(45) Veröffentlichungstag und Bekanntmachung des Hinweises auf die Patenterteilung: **19.06.2013**
(21) Anmeldenummer: 10166669.1
(22) Anmeldetag: 21.06.2010
(51) Int. Cl.: E05D 1/04, F16C 11/10, F16B 3/04

(54) **Vorrichtung zum Verbinden von Bauteilen**
Device for joining components
Dispositif de liaison de composants

(30) Priorität: 25.06.2009 DE 202009008736 U
(43) Veröffentlichungstag der Anmeldung: 12.01.2011
(73) Patentinhaber: Suniortec GmbH & Co. KG, 21465 Reinbek (DE)
(72) Erfinder: Leiseder, Ulrich, 21465, Reinbek (DE)
(74) Vertreter: Ter Meer Steinmeister & Partner

(56) Entgegenhaltungen:
- DE-A1-102007 054 205
- GB-A- 166 959
- US-A- 819 098
- US-A- 3 256 640
- US-A- 3 964 511

## Beschreibung

Die Erfindung betrifft eine Vorrichtung zum Verbinden von Bauteilen, mit mindestens zwei Kupplungselementen, die mit Gleitflächen paarweise aneinander anliegen und entlang dieser Gleitflächen gegeneinander verdrehbar sind (siehe z.B. US 819 098 A).

Aufgabe der Erfindung ist es, eine vielseitig verwendbare Kupplungsvorrichtung dieser Art zu schaffen, die in flexibler Weise einen einfachen Aufbau von insbesondere gelenkigen Verbindungen zwischen den Bauteilen ermöglicht.

Diese Aufgabe wird dadurch gelöst, dass mindestens eines der Kupplungselemente jedes Paares an einer rechtwinklig zu den Gleitflächen verlaufenden Teilungsfläche in mehre Segmente aufgeteilt ist, dass die Kupplungselemente jeweils in ihrer Gleitfläche eine ringförmige hinterschnittene Nut aufweisen, die bei dem in Segmente aufgeteilten Kupplungselement durch alle Segmente verläuft, und dass die Nuten jedes Paares von Kupplungselementen miteinander bündig sind und gemeinsam einen teilkreisförmigen Riegel aufnehmen, dessen Querschnitt zu den vereinigten Querschnitten der beiden Nuten komplementär ist und der in den Nuten verschiebbar ist.

Mindestens zwei der Kupplungselemente sind auf irgendeine geeignete Weise an je einem der zu verbindenden Bauteile zu befestigen oder bilden selbst diese Bauteile. Das in Segmente aufgeteilte Kupplungselement jedes Paares lässt sich werkzeuglos an seinem Partner befestigen, indem seine Segmente passend an die Gleitfläche angelegt werden und dann entweder der Riegel oder eines der Kupplungselemente so verdreht wird, dass der Riegel in die Nutabschnitte der Segmente eintritt und diese zusammenhält. Aufgrund des Hinterschnittes der Nuten wird so eine zugfeste, jedoch drehbare Verbindung zwischen den Kupplungselementen geschaffen.

Die Vorrichtung eignet sich insbesondere zum Aufbau von Gelenken und Scharnieren verschiedenster Art, beispielsweise für Türen, Fenster, Klappen und dergleichen.

Vorteilhafte Ausgestaltungen sind in den Unteransprüchen angegeben.

Bevorzugt ist an mindestens einem der Kupplungselemente eine Stellvorrichtung ausgebildet, mit der sich der Riegel in der Nut dieses Kupplungselements feststellen und lösen oder aber aktiv in der Nut verschieben lässt.

Im folgenden werden Ausführungsbeispiele der Erfindung anhand der Zeichnung näher erläutert.

Es zeigen:
- Fig. 1: eine zur Hälfte aufgeschnittene perspektivische Explosionsdarstel- lung einer Verbindungsvorrichtung mit zwei Kupplungselementen und zwei Riegeln;
- Fig. 2: ein Segment eines der Kupplungselemente in der Draufsicht sowie, im Schnitt dargestellt, die beiden Riegel während der Montage an dem betreffenden Segment;
- Fig. 3: eine Darstellung analog zu Fig. 2 für beide Segmente des Kupp- lungselements in einem Stadium während des Zusammenbaus, in dem die beiden Segmente noch nicht miteinander verriegelt sind;
- Fig. 4: eine Verriegelungsstellung der Riegel in dem Kupplungselement nach Fig. 3;
- Fig. 5: eine andere Verriegelungsstellung der Riegel relativ zu dem Kupp- lungselement nach Fig. 3 und 4 und relativ zu einem strichpunktiert angedeuteten, in zwei Segmente aufgeteilten weiteren Kupplungs- element;
- Fig. 6: eine perspektivische Ansicht einer durch eine erfindungsgemäße Vorrichtung gebildeten Eckverbindung zwischen zwei Schenkeln eines äußeren Rahmens und Schenkeln eines in diesen Rahmen eingesetzten Flügelrahmens;
- Fig. 7: einen Schnitt durch die Eckverbindung nach Fig. 6 in einem Zu- stand beim Einsetzen des Flügelrahmens;
- Fig. 8: einen Schnitt analog zu Fig. 7 für einen Zustand, in dem der Flügel- rahmen drehbar im äußeren Rahmen gehalten ist;
- Fig. 9: eine perspektivische Ansicht der Eckverbindung nach Fig. 6 bei leicht verschwenktem Flügelrahmen;
- Fig. 10: einen Schnitt durch die Eckverbindung in einem Zustand, in dem der Flügelrahmen am äußeren Rahmen verriegelt ist; und
- Fig. 11: eine teilweise aufgeschnittene perspektivische Ansicht einer Ver- bindungsvorrichtung gemäß einem anderen Ausführungsbeispiel.

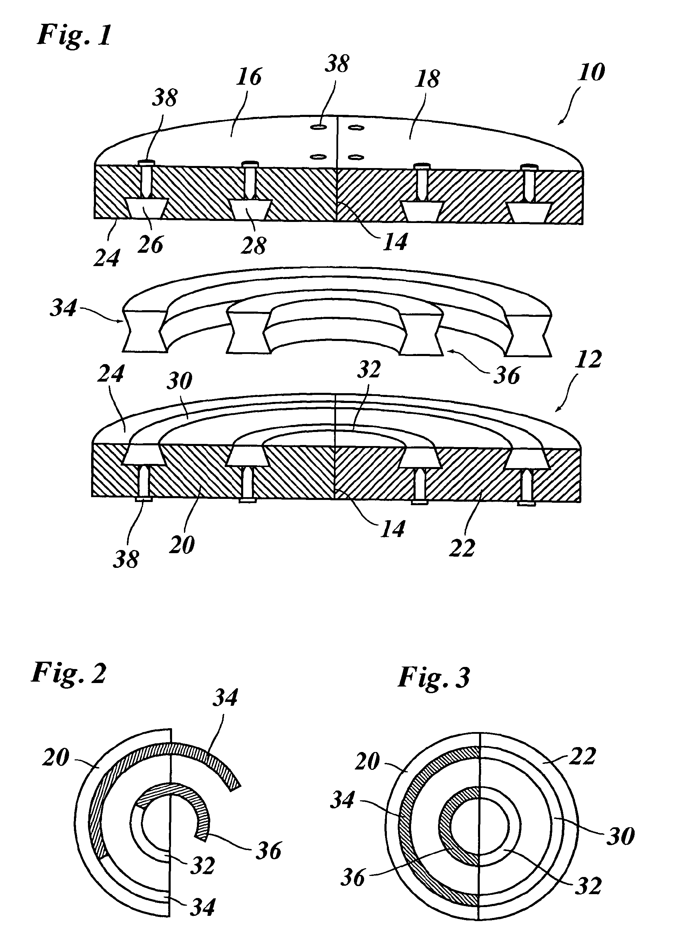

In Fig. 1 sind zwei Kupplungselemente 10, 12 dargestellt, die in diesem Beispiel die Form von Kreisscheiben haben und jeweils auf irgendeine geeignete Weise mit einem nicht gezeigten weiteren Bauteil zu verbinden sind. Das Kupplungselement 10 ist an einer Teilungsfläche 14 in zwei halbkreisförmige Segmente 16, 18 aufgeteilt, von denen in der Schnittdarstellung in Fig. 1 je eine Hälfte zu erkennen ist. Entsprechend ist auch das Kupplungselement 12 in zwei Segmente 20, 22 unterteilt. Im montierten Zustand liegen die beiden Kupplungselemente 10, 12 mit Gleitflächen 24 aneinander. In der Gleitfläche 24 des Kupplungselements 10 sind zwei konzentrische ringförmige Nuten 26, 28 ausgebildet, die je zur Hälfte durch jedes der beiden Segmente 16, 18 verlaufen. Die Nuten 26, 28 sind hinterschnitten und haben im gezeigten Beispiel ein Schwalbenschwanzprofil. In der Gleitfläche 24 des Kupplungselements 12 sind ringförmige Nuten 30, 32 ausgebildet, die spiegelbildlich zu den Nuten 26, 28 des Kupplungselements 10 angeordnet sind.

Zwischen den beiden Kupplungselementen 10, 12 sind zwei jeweils halbringförmige Riegel 34, 36 gezeigt, die jeweils ein Doppel-Schwalbenschwanzprofil haben und somit zu dem vereinigten Querschnitt der Nuten 26 und 30 bzw. 28 und 32 komplementär sind.

Der Zusammenbau der Kupplungsvorrichtung soll nun anhand der Fig. 2 bis 5 erläutert werden.

Fig. 2 zeigt das Segment 20 des Kupplungselements 12 in der Draufsicht. Die Riegel 34, 36 sind im horizontalen Schnitt gezeigt. Die Zeichnung illustriert, wie sich die Riegel jeweils in einer kreisbogenförmigen Bewegung in die zugehörigen Nuten 30, 32 einschieben lassen. In Fig. 3 sind die Nuten so weit eingeschoben, dass sie vollständig in dem Segment 20 aufgenommen sind. In diesem Zustand kann das Segment 22, das jeweils die andere Hälfte der Nuten 32, 34 aufweist, passend angesetzt werden.

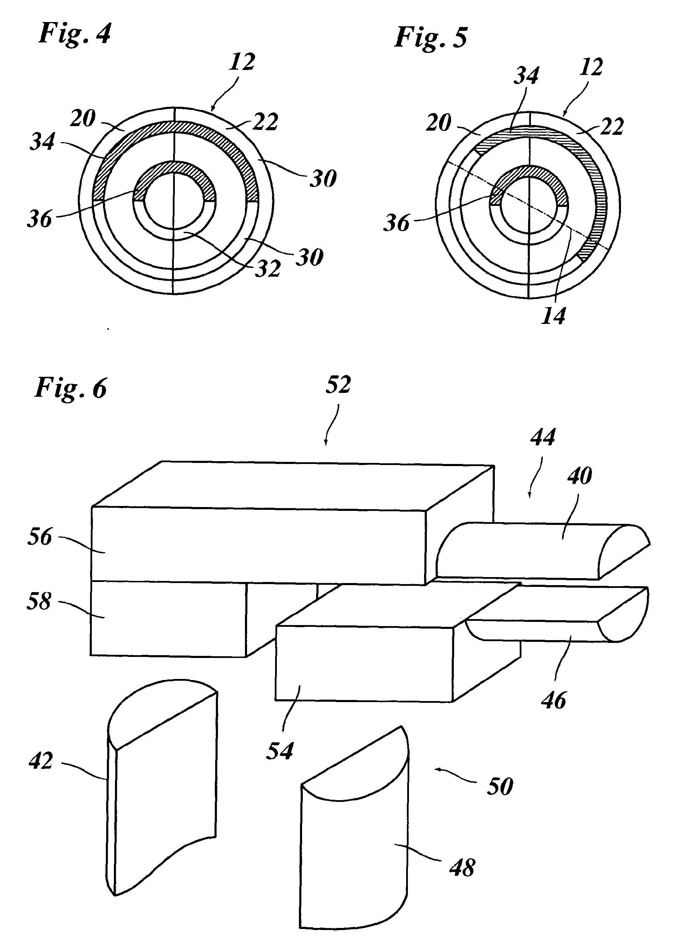

Um die beiden Segmente formschlüssig aneinander zu verriegeln, werden nun die Riegel 34, 36 in den Nuten 32, 34 verdreht, beispielsweise in die in Fig. 4 gezeigte Position.

Auf entsprechende Weise können dann die Segmente 20 und 22 des anderen Kupplungselements 12 nacheinander mit den Riegeln 34, 36 verbunden werden, so dass die beiden Kupplungselemente 10, 12 mit ihren Gleitflächen 24 aneinanderliegen und durch die Riegel 34, 36 formschlüssig jedoch drehbar verbunden werden. Die beiden Segmente 20, 22 des Kupplungselements 12 werden dann gemeinsam in eine Position verdreht, in der sie ebenfalls durch die Riegel 34, 36 formschlüssig miteinander verriegelt werden.

Wie Fig. 1 zeigt, weisen die Kupplungselemente 10, 12 jeweils für jeden der Riegel 34, 36 mindestens eine Stelleinrichtung 38 auf, die hier der Einfachheit halber als Feststellschraube dargestellt ist. Mit Hilfe dieser Stelleinrichtungen lässt sich der Riegel in der jeweils eingestellten Position in der zugehörigen Nut des Kupplungselements fixieren. So kann man beispielsweise mit Hilfe der Stelleinrichtungen 38 die Riegel an dem Kupplungselement 10 fixieren, um zu verhindern, dass sie sich mitdrehen, wenn das Kupplungselement 12 gedreht wird, oder umgekehrt. Durch selektives Lösen und Feststellen der Riegel und entsprechende Drehungen der Kupplungselemente lässt sich dabei jede gewünschte Winkelstellung der Riegel 34, 36 erreichen.

Als Beispiel zeigt Fig. 5 Winkelstellungen der Riegel 34, 36, in der die Segmente beider Kupplungselemente 10 und 12 jeweils durch mindestens einen Riegel formschlüssig zusammengehalten werden. Die Teilungsfläche 14 des in Fig. 5 nicht gezeigten Kupplungselements 10 ist hier strichpunktiert angedeutet. Wenn die Riegel in dieser Stellung mit Hilfe der Stelleinrichtungen 38 an dem Kupplungselement 12 fixiert werden, kann das andere Kupplungselement 10 frei gedreht werden, ohne dass die Kupplungselemente oder deren Segmente auseinanderfallen. Wahlweise kann auf die oben beschriebene Weise in jede Nut ein weiterer halbringförmiger Riegel eingebracht werden, so dass die Riegel die Nuten vollständig ausfüllen.

Zur Verminderung der Reibung beim Verdrehen der Kupplungselemente können die Riegel mit Gleitflächen ausgestattet oder mit Wälzkörpern bestückt sein, so dass sie z. B. als Kugelkäfige in einem zwischen den Kupplungselementen gebildeten Kugellager wirken.

Die Ausbildung der Stelleinrichtungen 38 ist lediglich als Beispiel zu verstehen. Wahlweise können anstelle von Stellschrauben auch pneumatische oder hydraulische Stelleinrichtungen oder elektromechanische Stelleinrichtungen zum Fixieren der Riegel vorgesehen sein. Ebenso sind als Stelleinrichtungen auch aktive Antriebe denkbar, beispielsweise elektromotorische Antriebe, die, etwa mittels Ritzeln, die in Zahnleisten an den Riegeln eingreifen, eine aktive Verdrehung der Riegel in ihren Nuten ermöglichen. Auf diese Weise wird zugleich ein Drehantrieb geschaffen, mit dem sich die Kupplungselemente 10 und 12 relativ zueinander verdrehen lassen. Denkbar sind auch magnetische Stelleinrichtungen, mit drehbar außerhalb der Kupplungselemente angeordneten Magneten, die mit in die Riegel integrierten Magneten zusammenwirken und so die Verstellung der Riegel bewirken. Da die Abschnitte der Nuten 26, 28 und 30, 32, die nicht von den Riegeln eingenommen werden, geschlossene Hohlräume bilden, die durch die Riegel wie durch Kolben begrenzt werden, lässt sich auch eine hydraulische oder pneumatische Stelleinrichtung realisieren, indem über geeignete Fluidzuführungen ein Druckfluid in die Nuten zugeführt wird.

Das oben beschriebene Prinzip der Verbindungsvorrichtung lässt sich vielfältig für verschiedene Verbindungszwecke einsetzen, insbesondere für gelenkige oder drehbare Verbindungen, und hat dabei den Vorteil, dass die Verbindungseinrichtung "in situ" zwischen den zu verbindenden Bauteilen montiert werden kann, ohne dass diese Bauteile in ihrer Position verändert werden müssen, da der Zusammenbau und die Verriegelung der Teile der Verbindungsvorrichtung allein durch Drehungen bewirkt wird.

Es versteht sich, dass entsprechend aufgebaute Verbindungsvorrichtungen auch mehr als zwei Kupplungselemente aufweisen können, beispielsweise stapelförmig übereinanderliegende scheibenförmige Kupplungselemente, die paarweise durch Riegel miteinander verbunden sind. Ebenso kann jedes Kupplungselement auch in drei oder mehr Segmente aufgeteilt sein, wobei die Riegel dann jeweils so dimensioniert sind, dass sie in einer geeigneten Winkelstellung vollständig in einem einzelnen Segment aufgenommen werden können.

Ergänzend zu den Riegeln können Füllstücke vorgesehen sein, deren Querschnitt der Hälfte des Querschnitts der Riegel entspricht und die somit jeweils nur eine der aneinandergrenzenden Nuten der Kupplungselemente ausfüllen (z. B. nur die Nut 26 in Fig. 1) und die zur Versteifung oder als Abstandshalter zwischen "echten" Riegeln dienen können.

Die Kupplungselemente brauchen nur zu Montagezwecken in Segmente aufgeteilt sein. Nach erfolgter Montage können die Segmente desselben Kupplungselements miteinander verschweißt, verklebt oder in sonstiger Weise miteinander verbunden werden. Wahlweise kann die Verbindungsvorrichtung auch insoweit vorgefertigt sein, als eines der Kupplungselemente schon als einstückiges Bauteil mit eingesetzten Riegeln ausgeliefert wird.

Während im gezeigten Beispiel jedes Paar von Kupplungselementen durch zwei Riegel zusammengehalten wird, sind auch Ausführungsformen möglich, in denen dazu nur ein einziger Riegel oder mehr als zwei Riegel vorgesehen sind.

Als Anwendungsbeispiel für die erfindungsgemäße Verbindungsvorrichtung soll im folgenden eine Flügelrahmenkonstruktion mit einem äußeren Rahmen und einem schwenkbar darin gehaltenen Flügelrahmen beschrieben werden.

Fig. 6 zeigt eine Ecke einer solchen Rahmenkonstruktion mit einem durch Schenkel 40, 42 gebildeten äußeren Rahmen 55 und einem durch Schenkel 46, 48 gebildeten inneren Flügelrahmen 50. Die Schenkel 40, 42 des äußeren Rahmens 44 werden durch einen Eckverbinder 52 zusammengehalten, während die Schenkel 46, 48 des Flügelahmens 50 durch einen Eckverbinder zusammengehalten werden, der hier als Segment 54 bezeichnet werden soll. Der Eckverbinder 52 und das Segment 54 sind als Verbindungsvorrichtungen gemäß der Erfindung ausgebildet und erlauben es zugleich den Flügelrahmen 50 schwenkbar am äußeren Rahmen 44 zu befestigen, wie im folgenden näher erläutert werden soll.

Der Eckverbinder 52 ist zusammengesetzt aus einem Kupplungselement 56, und einem Segment 58 eines weiteren Kupplungselements, zu dem außerdem auch das bereits erwähnte Segment 54 gehört. Auch die an die Eckverbinder angrenzenden Enden der Schenkel 40, 42 und 46, 48 sind als Segmente von Kupplungselementen im Sinne der Erfindung anzusehen.

Die Schenkel 40, 42 des äußeren Rahmens 44 sind als nach außen konvexe halbzylindrische Stäbe ausgebildet, während die Schenkel 46, 48 des Flügelrahmens 50 als nach innen konvexe halbzylindrische Stäbe ausgebildet sind.

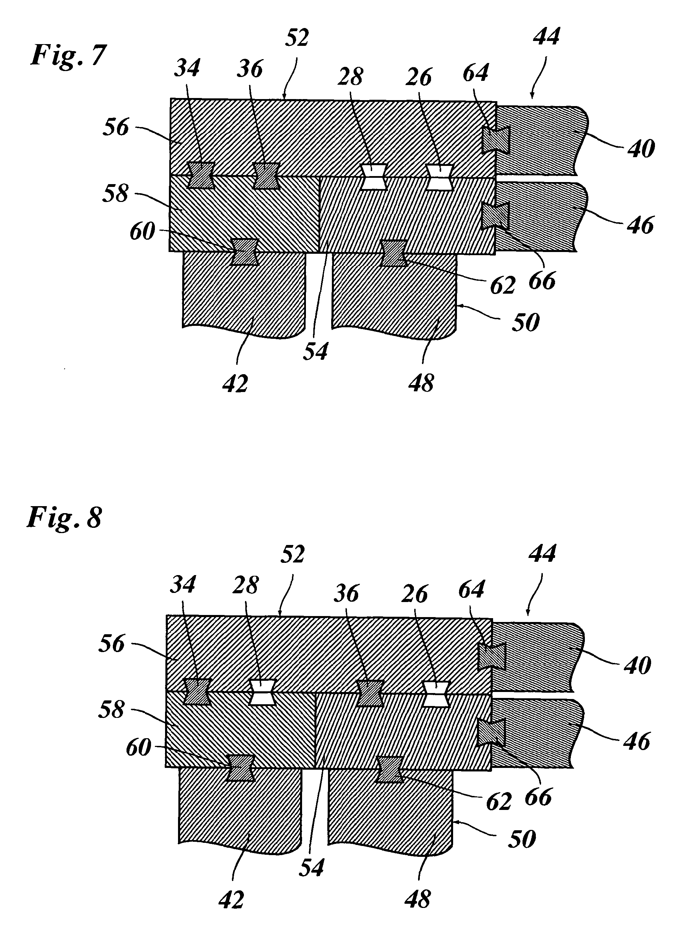

In Fig. 7 ist der Eckbereich der Rahmenkonstruktion im Schnitt dargestellt. Das Kupplungselement 56 des Eckverbinders 52 bildet eine Gleitfläche einerseits für die Segmente 54 und 58. Wie in Fig. 1 sind in dieser Gleitfläche konzentrische ringförmige Nuten 26, 28 ausgebildet. Spiegelbildlich dazu sind in den Segmenten 54 und 58 entsprechende Nuten ausgebildet, die jeweils die Form eines Halbkreises haben und sich zu einem Vollkreis ergänzen. In dem in Fig. 7 gezeigten Zustand werden das Kupplungselement 56 und das Segment 58 durch halbkreisförmige Riegel 34, 36 zusammengehalten, die vollständig innerhalb der Gleitfläche des Segments 58 liegen, während die Nuten im Bereich des Segments 54 leer bleiben.

An der Unterseite bilden die Segmente 54 und 58 eine weitere Gleitfläche für die Enden der Schenkel 42 und 46. Das Segment 58 und der Schenkel 42 werden durch einen weiteren halbkreisförmigen Riegel 60 zusammengehalten, der vollständig in dem Segment 58 aufgenommen ist. Entsprechend werden das Segment 54 und der Schenkel 46 durch einen Riegel 62 zusammengehalten, der vollständig in dem Segment 54 aufgenommen ist.

Die Seitenflächen des Kupplungselements 56 und des Segments 54, die den Schenkeln 40 und 48 zugewandt sind, bilden eine weitere Gleitfläche für die Enden dieser Schenkel. In dieser Gleitfläche ist eine ringförmige Nut für zwei halbkreisförmige Riegel 64, 66 ausgebildet, von denen einer den Schenkel 40 mit dem Kupplungselement 56 und der andere den Schenkel 48 mit dem Segment 54 zusammenhält.

Die drei übrigen, nicht gezeigten Ecken der Rahmenkonstruktion können auf entsprechende Weise gestaltet sein.

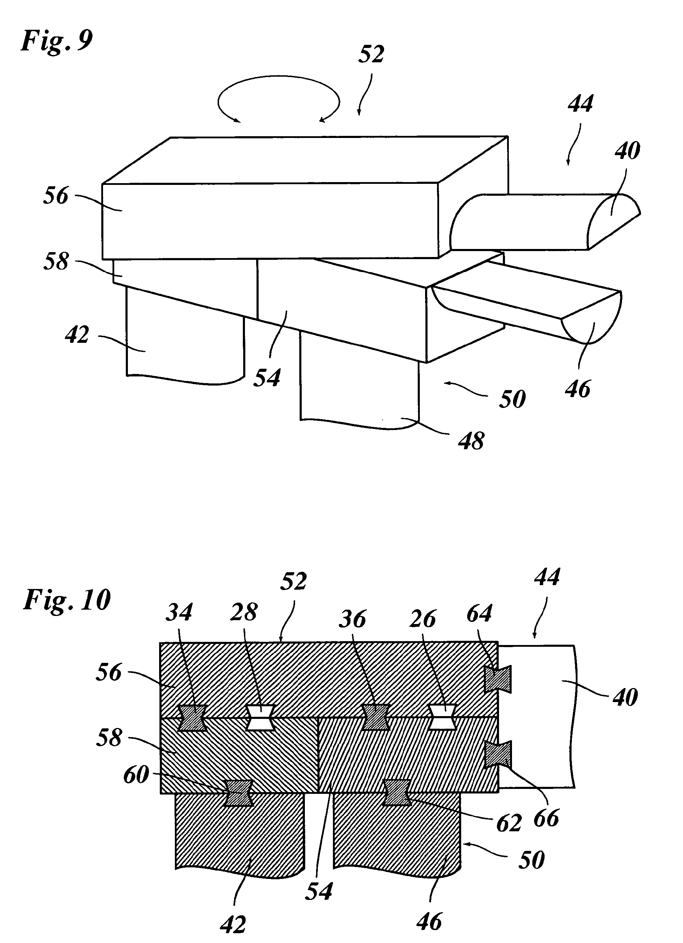

In dem in Fig. 7 gezeigten Zustand besteht keine feste Verbindung zwischen dem äußeren Rahmen 44 und dem inneren Flügelrahmen 50, so dass sich in diesem Zustand der Flügelrahmen in den äußeren Rahmen einsetzen lässt. Anschließend wird mit Hilfe von Stelleinrichtungen, die hier nicht gezeigt sind, mindestens einer der Riegel 34, 36 in eine Stellung gedreht, in der er die Segmente 58 und 54 miteinander verriegelt und diese mit dem Kupplungselement 56 zusammenhält, wie in Fig. 8 gezeigt ist. Auf diese Weise wird eine formschlüssige Verbindung zwischen dem Flügelrahmen 50 und dem äußeren Rahmen 44 geschaffen, die jedoch eine Drehung des Flügelrahmens um die durch die Mitte der ringförmigen Nuten 26 und 28 gehende Achse erlaubt. Fig. 9 zeigt den Flügelrahmen 50 in leicht ausgeschwenkter Position. Beim Verschwenken des Flügelrahmens 50 werden auch das Segment 58 des Eckverbinders 52 und der Schenkel 42 des äußeren Rahmens mitgeschwenkt, wie in Fig. 9 zu erkennen ist. Die in einer gemeinsamen ringförmigen Nut aufgenommenen Riegel 60 und 62 gestatten es auch, die Schenkel 42 und 46 gemeinsam um die Schwenkachse des Flügelrahmens zu drehen.

Wenn auch die übrigen Ecken der Rahmenkonstruktion in entsprechender Weise ausgebildet sind, lässt sich durch geeignete Konfiguration der Riegel auch die gegenüberliegende Seite der Rahmenkonstruktion als Schwenkachse für den Flügelrahmen bestimmen. Auf analoge Weise sind auch Konstruktionen denkbar, bei denen der Flügelrahmen wahlweise auch um eine horizontale Achse am oberen oder unteren Rand der Rahmenkonstruktion geschwenkt werden kann. Generell können Verbindungsvorrichtungen dieser Art durch geeignete Positionierung und durch Feststellen oder Lösen der Riegel gewissermaßen darauf "programmiert" werden, dass die sie gewünschten Drehbewegungen erlauben und unerwünschte Drehungen blockieren.

In dem in Fig. 6 gezeigten Zustand, also bei nicht verschwenktem Flügelrahmen, können außerdem auch die Schenkel 40, 46 gemeinsam um eine waagerechte Achse gedreht werden, die durch die ringförmige Nut definiert wird, die die Riegel 64, 66 aufnimmt. Da dann beispielsweise der Schenkel 40 mit beiden Riegeln 64, 66 (Fig. 8) in Eingriff kommt, und entsprechend auch der Schenkel 46, werden durch eine solche Drehung das Kupplungselement 56 und das Segment 54 miteinander verriegelt, so dass der Flügelrahmen in der geschlossenen Stellung blockiert wird. Dieser Zustand ist in Fig. 10 dargestellt. Die Schnittebene liegt dort in der Teilungsfläche zwischen den Schenkeln 40 und 46, so dass der Schenkel 46 nicht sichtbar ist und man auf die ebene Seitenfläche des Schenkels 40 blickt.

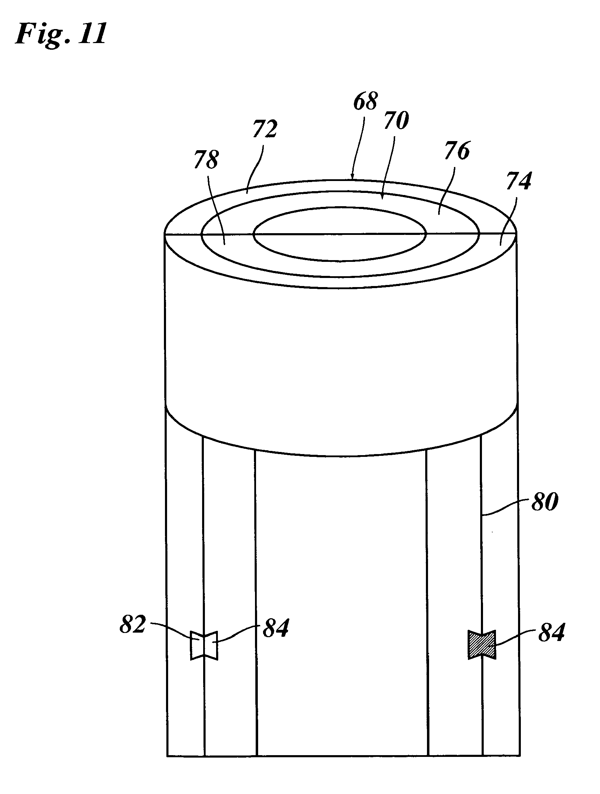

Während bei den bisher beschriebenen Ausführungsbeispielen die Gleitflächen der Kupplungselemente eben waren, sind auch Ausführungsformen denkbar, bei denen die Gleitflächen zylindrisch sind. Fig. 11 zeigt ein Beispiel mit hohlzylindrischen, koaxial ineinandergeschachtelten Kupplungselementen 68, 70, die jeweils in zwei halbzylindrische Segmente 72, 74 bzw. 76, 78 unterteilt sind. Die unteren Teile der Segmente 74 und 78 sind in Fig. 11 weggebrochen, so dass man auf die Kanten der Segmente 72 und 76 blickt. Diese Segmente liegen mit zylindrischen Gleitflächen 80 aneinander an, in denen umlaufende Nuten 82, 84 gebildet sind, die mindestens einen Riegel 86 aufnehmen.

Es sind auch Verbindungsvorrichtungen mit Kupplungselementen denkbar, die Kombinationen aus ebenen und zylindrischen Gleitflächen aufweisen.

## Patentansprüche

1. Vorrichtung zum Verbinden von Bauteilen, mit mindestens zwei Kupplungselementen (10, 12; 68, 70), die mit Gleitflächen (24; 80) paarweise aneinander liegen und entlang dieser Gleitflächen gegeneinander verdrehbar sind, **dadurch gekennzeichnet, dass** mindestens eines der Kupplungselemente (10, 12; 68, 70) jedes Paares an einer rechtwinklig zu den Gleitflächen (24) verlaufenden Teilungsfläche (14) in mehrere Segmente (16, 18, 20, 22; 72, 74, 76, 78) aufgeteilt ist, dass die Kupplungselemente jeweils in ihrer Gleitfläche (24) eine ringförmige hinterschnittene Nut (26, 28; 30, 32) aufweisen, die bei dem in Segmente aufgeteilten Kupplungselement durch alle Segmente verläuft, und dass die Nuten (26, 30; 28, 32) jedes Paares von Kupplungselementen miteinander bündig sind und gemeinsam einen teilkreisförmigen Riegel (34, 36; 84) aufnehmen, dessen Querschnitt zu den vereinigten Querschnitten der beiden Nuten komplementär ist und der in den Nuten verschiebbar ist.

2. Vorrichtung nach Anspruch 1, bei der mindestens ein Kupplungselement eine Stelleinrichtung (38) zum Feststellen und Lösen und/oder Verschieben des Riegels (34, 36) in seiner Nut (26, 28, 30, 32) aufweist.

3. Vorrichtung nach Anspruch 1 oder 2, bei der die Kupplungselemente (10, 12) scheibenförmig sind und als Stapel übereinander angeordnet sind.

4. Vorrichtung nach Anspruch 1 oder 2, bei der die Kupplungselemente (68, 70) koaxial zueinander angeordnet sind und zylindrische Gleitflächen (80) aufweisen.

5. Vorrichtung nach einem der vorstehenden Ansprüche als Eckverbinder (52) einer Rahmenkonstruktion.

6. Vorrichtung nach Anspruch 5, bei der die Rahmenkonstruktion einen äußeren Rahmen (44) und einen schwenkbar darin gehaltenen inneren Flügelrahmen (50) aufweist, wobei ein Segment (54) eines Kupplungselements einen Eckverbinder für den Flügelrahmen (50) bildet und ein anderes Segment (58) dieses Kupplungselements und ein weiteres Kupplungselement (56) einen Eckverbinder (52) für den äußeren Rahmen (44) bilden und diese Kupplungselemente durch die Riegel (34, 36) so zusammengehalten werden, dass je nach Riegelstellung der Flügelrahmen (50) aus dem äußeren Rahmen (44) lösbar ist oder relativ zu dem äußeren Rahmen schwenkbar ist.

7. Vorrichtung nach Anspruch 6, bei der zwei parallele Schenkel (40, 46) des äußeren Rahmens (44) und des Flügelrahmens (50) Kupplungselemente bilden, die relativ zu den Eckverbindern gemeinsam in eine Position drehbar sind, in der sie die Schwenkbewegung des Flügelrahmens (50) blockieren.

## Claims

1. Device for joining structural components, comprising at least two coupling members (10, 12; 68, 70) being engaged one against the other with slide surfaces (24; 80) and being rotatable relative to one another along these slide surfaces, **characterized in that** at least one of the coupling members (10, 12; 68, 70) of each pair is divided into a plurality of segments (16, 18, 20, 22; 72, 74, 76, 78) along a separation surface (14) that extends at right angles to the slide surfaces (24), each of the coupling members has, in its slide surface (24), an undercut annular groove (26, 28; 30, 32) which, in case of the coupling member that is divided into segments, passes through all segments, and **in that** the grooves (26, 30; 28, 32) of each pair of coupling members are flush with one another and, together, accommodate a lock (34, 36; 84) in the form of a circular arc segment the cross-section of which is complementary to the united cross-sections of the two grooves, and which is slideable in the grooves.

2. Device according to claim 1, wherein at least one coupling member has setting means (38) for fixing and releasing and/or sliding the lock (34, 36) in its groove (26, 28, 30, 32).

3. Device according to claim 1 or 2, wherein the coupling members (10, 12) are disk-shaped and arranged one upon the other in a stack.

4. Device according to claim 1 or 2, wherein the coupling members (68, 70) are arranged coaxially relative to one another and have cylindrical slide surfaces (80).

5. Device according to any of the preceding claims, configured as a corner connector (52) in a frame structure.

6. Device according to claim 5, wherein the frame structure has an outer frame (44) and a sash frame (50) pivotally held in the outer frame, wherein one segment (54) of a coupling member forms a corner connector for the sash frame (50) and another segment (58) of this coupling member and yet another coupling member (56) form a corner connector for the outer frame (44), and these coupling members are held together by the locks (34, 36) such that, depending on the position of the lock, the sash frame (50) is detachable from the outer frame (44) or pivotable relative to the outer frame.

7. Device according to claim 6, wherein two parallel legs (40, 46) of the outer frame (44) and the sash frame (50) form coupling members which can be jointly rotated relative to the corner connectors into a position in which they block the pivotal movement of the sash frame (50).

## Revendications

1. Dispositif pour assembler des composants, comportant au moins deux éléments de couplage (10, 12 ; 68, 70) qui sont en contact l'un avec l'autre, deux par deux, avec des surfaces de glissement (24 ; 80) et qui peuvent tourner l'un contre l'autre le long de ces surfaces de glissement, **caractérisé en ce qu'**au moins un des éléments de couplage (10, 12 ; 68, 70) de chaque paire est divisé en plusieurs segments (16, 18, 20, 22 ; 72, 74, 76, 78) sur une surface de division (14) s'étendant perpendiculairement aux surfaces de glissement (24), **en ce que** la surface de glissement (24) de chaque élément de couplage comporte une gorge à contre-dépouille circulaire (26, 28 ; 30, 32) qui s'étend dans l'élément de couplage divisé en segments, à travers tous les segments, et **en ce que** les gorges (26, 28 ; 30, 32) de chaque paire d'éléments de couplage sont affleurantes les unes aux autres et reçoivent conjointement un verrou semi circulaire (34, 36 ; 84) dont la section transversale est complémentaire des sections transversales réunies des deux gorges et qui peut être déplacée dans les gorges.

2. Dispositif selon la revendication 1, dans lequel au moins un élément de couplage comporte un mécanisme de réglage (38) pour bloquer et débloquer et/ou déplacer le verrou (34, 36) dans sa gorge (26, 28 ; 30, 32).

3. Dispositif selon la revendication 1 ou 2, dans lequel les éléments de couplage (10, 12) sont en forme de disque et sont agencés l'un au-dessus de l'autre de manière empilée.

4. Dispositif selon la revendication 1 ou 2, dans lequel les éléments de couplage (68, 70) sont agencés coaxialement l'un par rapport à l'autre et comportent des surfaces de glissement cylindriques (80).

5. Dispositif selon l'une quelconque des revendications précédentes se présentant sous forme d'élément d'assemblage d'angle (50) d'une construction de châssis.

6. Dispositif selon la revendication 5, dans lequel la construction de châssis comporte un châssis extérieur (44) et un châssis de battant intérieur (50) maintenu de manière pivotante dans celui-ci, dans lequel un segment (54) d'un élément de couplage forme un élément d'assemblage d'angle pour le châssis de battant (50) et un autre segment (58) de cet élément de couplage, et un élément de couplage supplémentaire (56) forme un élément d'assemblage d'angle (52) pour le châssis extérieur (44), et ces éléments de couplage sont maintenus ensemble par les verrous (34, 36) de telle sorte que le châssis de battant (50) peut être débloqué du châssis extérieur (44) en fonction de la position du verrou ou peut pivoter par rapport au châssis extérieur.

7. Dispositif selon la revendication 6, dans lequel deux traverses parallèles (40, 46) du châssis extérieur (44) et du châssis de battant (50) forment des éléments de couplage qui peuvent tourner conjointement par rapport aux éléments d'assemblage d'angle jusqu'à une position dans laquelle ils bloquent le mouvement de pivotement du châssis de battant (50).
